# EUROPÄISCHE PATENTANMELDUNG

(11) **EP 0 745 468 A1**
(43) Veröffentlichungstag der Anmeldung: **04.12.1996**
(21) Anmeldenummer: 96108573.5
(22) Anmeldetag: 30.05.1996
(51) Int. Cl.: B29C 45/17

(54) **Formwerkzeug, insbesondere für das Kunststoffspritzgiessen mittels Gasinnendruck und Verfahren zur Herstellung von Kunststoff-Spritzgussformteilen unter Einsatz des Formwerkzeugs**

(30) Priorität: 30.05.1995 DE 19519801
(71) Anmelder: Bauer Engineering GmbH, 63512 Hainburg (DE)
(72) Erfinder: Bernhardt, Achim Roland, Dipl.-Ing. (FH), 63512 Hainburg (DE)
(74) Vertreter: Hering, Hartmut, Dipl.-Ing.

(57) **Zusammenfassung**

Es wird ein Formwerkzeug (4) angegeben, welches insbesondere für das Kunststoffspritzgießen mittels Gasinnendruck bestimmt ist. Der von den Formhälften (5, 6) begrenzte Innenhohlraum (7) wird mit Kunststoffspritzmasse (13) über einen Einlaßkanal (3) gefüllt, und über eine Zufuhrdüse (8) erfolgt insbesondere eine Innendruckbeaufschlagung. Ferner weist das Formwerkzeug (4) einen Auslaßkanal (9) auf. In diesem Auslaßkanal (9) ist ein öffen- und schließbares Ventil (10) angeordnet.

Beim Verfahren zur Herstellung von Kunststoff-Spritzgußformteilen mit einem solchen Formwerkzeug (4) wird während des Spritzgießen des Formteils und über die Zufuhrdüse (8) anliegendem Innendruck zur Erzeugung eines Hohlraums im Formteil (11) das Ventil (10) im Auslaßkanal (9) geschlossen gehalten, und nach wenigstens teilweisem Verfestigen des Formteils (11) und bei noch geschlossenem Formwerkzeug (4) wird das Ventil (10) geöffnet und das Gas aus dem Formwerkzeug (4) über den Auslaßkanal (9) ausgeleitet. Vorzugsweise kann zur Zwangskühlung und verstärkten Kühlung ein Austausch- bzw. Kühlmedium gegebenenfalls über die Zufuhrdüse (8) und/oder eine zusätzliche Zufuhrdüse (14) eingeleitet werden.

## Beschreibung

Die Erfindung befaßt sich mit einem Formwerkzeug, welches insbesondere für das Kunststoffspritzgießen mittels Gasinnendruck bestimmt ist. Ferner befaßt sich die Erfindung mit einem Verfahren zur Herstellung von Kunststoff-Spritzgußformteilen unter Verwendung eines solchen Formwerkzeugs.

Formwerkzeuge, welche insbesondere für das Kunststoffspritzgießen mittels Gasinnendruck bestimmt sind, haben wenigstens zwei Formhälften, welche einen Innenhohlraum begrenzen. Ferner ist ein zum Innenhohlraum führender Einlaßkanal zum Einleiten der Kunststoffspritzmasse, sowie ein von dem Innenhohlraum abführender Auslaßkanal vorhanden, und über wenigstens eine Zufuhrdüse wird für die Gasinnendruckbeaufschlagung Gas eingeleitet. Hierbei kann es sich beispielsweise um Stickstoff oder dergleichen handeln.

Bei diesem üblichen Formwerkzeug und bei den üblichen Verfahren zur Herstellung der Kunststoff-Spritzgußformteilen mit einem solchen Formwerkzeug hat sich gezeigt, daß eine relativ lange Zeit nach dem Befüllen des Formwerkzeugs mit der Kunststoffspritzmasse verstreichen muß, bis da so gebildete Spritzgußformteil vollständig ausgehärtet ist und das Formwerkzeug zum Entnehmen des fertiggestellten Spritzgußformteils geöffnet werden kann. Die insbesondere zur Erzeugung eines Hohlraums im Formteil gebildete Gasblase enthält das über die Zufuhrdüse zur Gasinnendruckbeaufschlagung eingeleitete Gas mit einer Temperatur, welche in etwa der Kunststoffspritzmasse entspricht. Ferner hat Gas hinsichtlich der Wärmeleitung ein isolierendes Verhalten, so daß man relativ lange Abkühlzeiten hierbei in Kauf nehmen muß, bis das fertiggestellte Spritzgußformteil aus dem Formwerkzeug entnommen werden kann.

Die Erfindung zielt darauf ab, ein Formwerkzeug und ein Verfahren zur Herstellung von Kunststoff-Spritzgußformteilen mit einem solchen Formwerkzeug in einer solchen Weise bereitzustellen, daß sich die Herstellungszeiten für ein Spritzgußformteil hierbei wesentlich verkürzen lassen.

Nach der Erfindung wird hierzu einerseits ein Formwerkzeug, insbesondere für das Kunststoffspritzgießen mittels Gasinnendruck, mit wenigstens zwei Formhälften, welche einen Innenhohlraum begrenzen, sowie mit einem zum Innenhohlraum führenden Einlaßkanal für die Kunststoffspritzmasse, wenigstens einer Zufuhrdüse, insbesondere für die Innendruckbeaufschlagung, und einem Auslaßkanal bereitgestellt, welches sich dadurch auszeichnet, daß ein öffen- und schließbares Ventil im Auslaßkanal angeordnet ist.

Bei diesem nach der Erfindung beschaffenen Formwerkzeug kann somit in gesteuerter Weise über den Auslaßkanal wenigstens nach dem teilweisen Verfestigen des Spritzgußformteils im Formwerkzeug bei noch geschlossener Form das Gas, welches über die Zufuhrdüse zur Gasinnendruckbeaufschlagung eingeleitet wurde, beispielsweise zur Umgebung hin ausgeleitet werden. Die sich im Auslaßkanal befindende Kunststoffmasse wird bei geöffnetem Ventil ebenfalls durch das Gas über den Auslaßkanal ausgestoßen. Auf diese Weise kann das Gas zur Gasinnendruckbeaufschlagung noch vor dem Öffnen des Formwerkzeugs abgeleitet werden, um eine effizientere Abkühlung des Spritzgußformteils im Formwerkzeug zu erreichen, so daß sich die Herstellungszeiten für das Spritzgußformteil nennenswert reduzieren lassen.

Gemäß einem weiteren Aspekt nach der Erfindung wird ein Verfahren zur Herstellung von Kunststoff-Spritzgußformteilen mittels eines Formwerkzeugs der vorstehend genannten Art bereitgestellt, welches sich dadurch auszeichnet, daß während des Spritzgießens des Formteils und über die Zufuhrdüse anliegendem Innendruck zur Erzeugung eines Hohlraums im Formteil das Ventil im Auslaßkanal geschlossen gehalten wird, und daß nach wenigstens teilweisem Verfestigen des Formteils und bei noch geschlossenem Formwerkzeug das Ventil geöffnet wird und das Gas aus dem Formwerkzeug über den Auslaßkanal ausgeleitet wird.

Bei diesem Verfahren nach der Erfindung wird somit das Gas zur Gasinnendruckbeaufschlagung zwangsweise zur Umgebung hin abgeleitet, um die wärmeisolierende Wirkung der im Inneren des Formwerkzeugs befindenden Gasblase zu verhindern. Durch diese Gasableitung kann somit die Temperatur des Innenraums herabgesetzt werden und es ist ein größerer Temperaturgradient vorhanden, wodurch eine schnellere Erstarrung des Formteils erreicht wird, so daß dieses schneller aus dem Formwerkzeug nach dem Öffnen desselben entnommen werden kann.

In bevorzugter Weise wird nach dem Öffnen des Ventils im Auslaßkanal über die Zufuhrdüse ein Austausch- bzw. Kühlmedium zugeführt. Bei dieser Verfahrensauslegung erfolgt zusätzlich eine Spülung und Zwangskühlung des Spritzgußformteils im Formwerkzeug von der Innenseite her, so daß sich die Wartezeiten bis zum Öffnen des Formwerkzeugs und zum Entnehmen des Formteils wesentlich reduzieren lassen. Hierdurch läßt sich dann insgesamt gesehen die Produktionszeit pro Spritzgußformteil wesentlich herabsetzen, so daß man einen effektiveren Produktionsablauf und eine höhere Ausstoßleistung bei derartigen Spritzgießanlagen erhält. Versuche haben beispielsweise gezeigt, daß man Reduzierungen der Produktionszeit von bis zu 50 % erreichen kann.

Gegebenenfalls kann ein Austausch- bzw. Kühlmedium über eine zusätzlich vorgesehene Düse zugeführt werden. Vor dem Öffnen des Formwerkzeugs kann das zugeführte Austausch- bzw. Kühlmedium beispielsweise durch Überdruck ausgetrieben werden. Alternativ kann es im Formteil verbleiben.

Als Austausch- und Kühlmedium kann ein Medium in Gasform oder in flüssiger Form genommen werden. Vorzugsweise kommt flüssiger Stickstoff, Luft, ein Luft/Gasgemisch oder eine andere Flüssigkeit, wie Wasser in Betracht. Die entsprechende Art des Austausch- bzw. Kühlmediums läßt sich ohne Schwierigkeiten auf den jeweiligen Anwendungsfall abstimmen, wobei zur Einleitung desselben beispielsweise die Zufuhrdüse genutzt werden kann, welche beim Spritzgießen zur Innendruckbeaufschlagung zuvor genutzt worden ist. Hierdurch vereinfacht sich auch die Durchführung des Verfahrens nach der Erfindung.

Vorzugsweise wird nach dem Ausleiten des Gases aus dem Formwerkzeug über den Auslaßkanal und einer gegebenenfalls durchgeführten Zwangskühlung das Formwerkzeug geöffnet. Dann kann das Spritzgußformteil aus dem Formwerkzeug entnommen werden und ein neuer Spritzgußvorgang kann ausgeführt werden.

Wesentlich bei der Erfindung ist die Tatsache, daß man einerseits das zur Gasinnendruckbeaufschlagung dienende Medium nach dem teilweisen Verfestigen des im Formwerkzeug gebildeten Spritzgußformteils zwangsweise ableitet, und daß man andererseits auch mittels eines Austausch- bzw. Kühlmediums eine Zwangskühlung des Formteils vom Innenraum her vornehmen kann, um möglichst kurze Produktionszeiten pro herzustellendem Spritzgußformteil zu erzielen.

Die Erfindung wird nachstehend an Hand einer bevorzugten Ausführungsform unter Bezugnahme auf die beigefügte Zeichnung erläutert. Darin zeigt:
- Fig. 1: eine schematische Ansicht einer Vorrichtung zum Kunststoffspritzgießen in einem ersten Herstellungsschritt, und
- Fig. 2: eine schematische Ansicht einer Spritzgußvorrichtung ähnlich Fig. 1 in einem zweiten Herstellungsschritt.

An Hand den Figuren der Zeichnung wird sowohl das Formwerkzeug nach der Erfindung als auch das Verfahren zur Herstellung von Kunststoffspritzgußformteilen mit einem solchen Formwerkzeug erläutert. In den Figuren der Zeichnung sind gleiche oder ähnliche Teile mit denselben Bezugszeichen versehen.

Insgesamt mit 1 ist eine Vorrichtung zum Kunststoff-Spritzgießen bezeichnet. Diese umfaßt eine schematisch dargestellte Einspritzeinheit 2, deren Ausgang mit einem Einlaßkanal 3 eines insgesamt mit 4 bezeichneten Formwerkzeugs verbunden ist. Beim dargestellten Beispiel umfaßt das Formwerkzeug 4 zwei Formhälften 5 und 6. Die beiden Formhälften 5 und 6 begrenzen einen Innenhohlraum 7 des Formwerkzeugs 4. In der Formhälfte 5 ist der Einlaßkanal 3 ausgebildet, welcher mit dem Auslaß der Einspritzeinheit 2 in Verbindung steht. Ferner ist durch die Formhälfte 5 eine Zufuhrdüse 8 durchgeführt, welche in den Innenhohlraum 7 reicht und über die Innenwand des Formwerkzeugs 4 vorstehen kann.

Die Formhälfte 6 weist einen Auslaßkanal 9 auf, in welchem ein öffen- und schließbares Ventil 10 angeordnet ist.

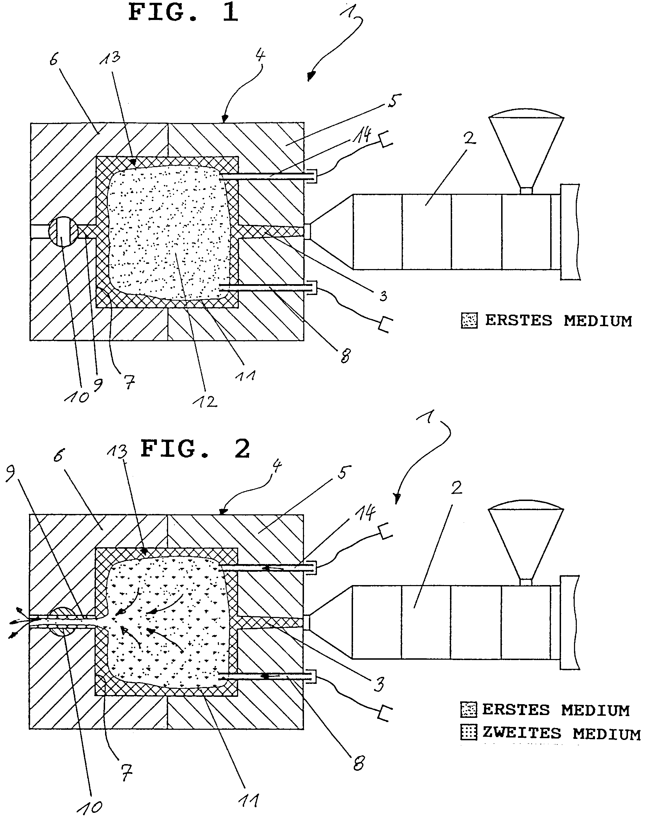

Wie in Figur 1 dargestellt ist, wird die von der Einspritzeinheit 2 kommende Kunststoffspritzmasse über den Einlaßkanal 3 in den Innenhohlraum 7 des Formwerkzeugs 4 eingeleitet und über die Zufuhrdüse 8 wird ein unter Druck stehendes, erstes gasförmiges Medium, beispielsweise Stickstoff, eingeleitet, so daß durch die Gasinnendruckbeaufschlagung im Inneren des Formteils 11 ein Hohlraum erzeugt wird. Somit wird eine Gasblase 12 im Formwerkzeug 4 gebildet, wie dies in Figur 1 gezeigt ist. Der Gasinnendruck kann hierbei in entsprechender Weise gesteuert und geregelt werden, was vom zu verarbeitenden Kunststoffmaterial und von der Gestalt des herzustellenden Formteils abhängig ist. Auch das hierfür eingesetzte Gas wird auf den jeweiligen Anwendungszweck abgestimmt. In Figur 1 ist das Ventil 10 im Auslaßkanal 9 in seiner Schließstellung gezeigt, das heißt, Figur 1 zeigt einen Herstellungsschritt, bei dem die Kunststoffspritzmasse gerade in das Formwerkzeug 4 beispielsweise eingefüllt ist.

Unter Bezugnahme auf Figur 2 ist ein Herstellungsschritt gezeigt, bei dem die eingefüllte Kunststoffspritzmasse 13 wenigstens teilweise sich verfestigt hat. Wie in Figur 2 dargestellt ist, wird bei noch geschlossenem Formwerkzeug 4 und teilweise verfestigtem Formteil 11 das Ventil 10 geöffnet, und über den Auslaßkanal 9 kann nunmehr das Gas aus der Gasblase 12, wie mit Pfeilen dargestellt, nach außen entweichen, wobei die dem Öffnungsquerschnitt des Auslaßkanals 9 zugeordnete stopfenförmige Kunststoffspritzmasse von dem Gas beim Entweichen aus der Gasblase 12 über den Auslaßkanal 9 mitgenommen wird oder hierdurch die Wandung aufgerissen wird.

Wie zusätzlich noch mit Pfeilen angedeutet ist, kann über die Zufuhrdüse 8 oder eine zusätzliche Zufuhrdüse 14 ein Austausch- bzw. Kühlmedium als zweites Medium eingeleitet werden, wodurch eine zwangsweise Innenkühlung des Spritzgußformteils 11 erzielt wird, um ein schnelleres Erstarren des Formteils 11 zu erreichen. Die Düse 14 kann zugleich wurde als Mediumsauslaß genutzt werden.

Als Austausch- bzw. Kühlmedium kann ein gasförmiges oder flüssiges Medium eingesetzt werden. Insbesondere kommen flüssiger Stickstoff, Luft, ein Luft/Gasgemisch oder eine andere Flüssigkeit, wie Wasser, in Betracht. Unter Ausnutzung der für die Innendruckbeaufschlagung vorgesehenen Zufuhrdüse 8 kann diese beim erfindungsgemäßen Verfahren auch zur Zwangskühlung des Formteils von innen her zusätzlich genutzt werden, wobei das Ventil 10 im Auslaßkanal 9 dann offen ist, um die Wärme möglichst effizient von der Innenseite her nach außen abzuführen. Wenn man als Austausch- bzw. Kühlmedium beispielsweise Wasser nimmt, so kann man eine Verringerung der Produktionszeit pro Formteil 11 von etwa 50 % erreichen.

Beim erfindungsgemäßen Verfahren wird somit das Formteil 11 nach dem teilweisen Verfestigen von innen her einerseits dadurch gekühlt, daß das Gas von der Gasinnendruckbeaufschlagung nach außen hin über den Auslaßkanal 9 bei geöffnetem Ventil 10 ausgeleitet werden kann und zusätzlich kann zur weiteren Reduzierung der Abkühlzeit eine zusätzliche Zwangskühlung und Spühlung des Formteils 11 von innen her erfolgen.

Selbstverständlich ist die Erfindung nicht auf die voranstehend beschriebenen Einzelheiten beschränkt, sondern es sind zahlreiche Abänderungen und Modifikationen möglich, die der Fachmann im Bedarfsfall treffen wird. Beispielsweise kann das Formwerkzeug mehr als zwei Formhälften 5 und 6 aufweisen, welche einen Innenhohlraum 7 zusammen begrenzen. Gegebenenfalls kann auch mehr als eine Zufuhrdüse 8 bei dem Formwerkzeug 4 vorgesehen sein. In Abhängigkeit von der Gestalt des herzustellenden Formteils 11 kann es auch möglich sein, daß mehr als ein Auslaßkanal 9 vorhanden ist. Der Auslaßkanal 9 kann gegebenenfalls auch in der Formhälfte des Formwerkzeugs 4 vorgesehen sein, welche auch den Einlaßkanal 3 und/oder die Zufuhrdüse 8 enthält. Wenn mehrere Auslaßkanäle 9 vorhanden sind, so haben diese in entsprechender Weise zugeordnete Ventile 10 und die Steuerung dieser Ventile kann in geeigneter Weise bewerkstelligt werden. Diese Ventile 10 brauchen nicht alle gleichzeitig geöffnet zu werden, sondern sie können in einer gegebenen Zeitabfolge hintereinander beispielsweise geöffnet werden. Beim Befüllen des Formwerkzeugs 4 sind aber alle diese Ventile 10 geschlossen.

Sobald dann das Formteil 11 insgesamt erstarrt und abgekühlt ist, wird das Formwerkzeug 4 geöffnet und das Formteil 11 wird entnommen.

### Bezugszeichenliste

- 1: Vorrichtung zum Kunststoffspritzgießen insgesamt
- 2: Einspritzeinheit
- 3: Einlaßkanal
- 4: Formwerkzeug insgesamt
- 5: Formhälfte
- 6: Formhälfte
- 7: Innenhohlraum
- 8: Zufuhrdüse
- 9: Auslaßkanal
- 10: Ventil
- 11: Formteil
- 12: Gasblase
- 13: Kunststoffspritzmasse
- 14: zusätzliche Zufuhrdüse

## Patentansprüche

1. Formwerkzeug, insbesondere für das Kunststoffspritzgießen mittels Gasinnendruck, mit wenigstens zwei Formhälften (5, 6), welche einen Innenhohlraum (7) begrenzen, sowie mit einem zum Innenhohlraum (7) führenden Einlaßkanal (3) für die Kunststoffspritzmasse (13), wenigstens einer Zufuhrdüse (8), insbesondere für die Innendruckbeaufschlagung, und einem Auslaßkanal (9), **gekennzeichnet durch** ein öffen- und schließbares Ventil (10) im Auslaßkanal (9).

2. Verfahren zur Herstellung von Kunststoff-Spritzgußformteilen mit einem Formwerkzeug (4) nach Anspruch 1, **dadurch gekennzeichnet**, daß während des Spritzgießens des Formteils (11) und über die Zufuhrdüse (8) anliegendem Innendruck zur Erzeugung eines Hohlraums im Formteil (11) das Ventil (10) im Auslaßkanal (9) geschlossen gehalten wird, und daß nach wenigstens teilweisem Verfestigen des Formteils (11) und bei noch geschlossenem Formwerkzeug (4) das Ventil (10) geöffnet wird und das Gas aus dem Formwerkzeug (4) über den Auslaßkanal (9) ausgeleitet wird.

3. Verfahren nach Anspruch 2, **dadurch gekennzeichnet**, daß nach dem Öffnen des Ventils (10) über die Zufuhrdüse (8) ein Austausch- bzw. Kühlmedium zugeführt wird.

4. Verfahren nach Anspruch 2, **dadurch gekennzeichnet**, daß ein Austausch- bzw. Kühlmedium über eine zusätzlich Zufuhrdüse (15) zugeführt wird.

5. Verfahren nach Anspruch 3 oder 4, **dadurch gekennzeichnet**, daß das zugeführte Austausch- bzw. Kühlmedium durch Überdrück ausgetrieben wird.

6. Verfahren nach Anspruch 3 oder 4, **dadurch gekennzeichnet**, daß das zugeführte Austausch- bzw. Kühlmedium im Formteil (11) verbleibt.

7. Verfahren nach einem der Ansprüche 3 bis 6, **dadurch gekennzeichnet**, daß das Austausch- bzw. Kühlmedium gasförmig oder flüssig ist.

8. Verfahren nach einem der Ansprüche 3 bis 7, **dadurch gekennzeichnet**, daß das Austausch- bzw. Kühlmedium flüssiger Stickstoff, Luft, ein Luft/Gasgemisch oder eine andere Füssigkeit, wie Wasser, ist.

9. Verfahren nach einem der Ansprüche 2 bis 8, **dadurch gekennzeichnet**, daß nach dem Ausleiten des Gases aus dem Formwerkzeug (4) über den Auslaßkanal (9) und einer gegebenenfalls durchgeführten Zwangskühlung das Formwerkzeug (4) geöffnet wird.
